(19) Europäisches Patentamt
European Patent Office
Office européen des brevets

(11) **EP 1 560 457 B1**

(12) **EUROPEAN PATENT SPECIFICATION**

(45) Date of publication and mention
of the grant of the patent:
**30.01.2008 Bulletin 2008/05**

(51) Int Cl.:
***H04Q 11/00*** *(2006.01)*

(21) Application number: **04090028.4**

(22) Date of filing: **30.01.2004**

(54) **A hybrid optical network and a method of routing data packets in a hybrid optical network**

Hybrides, optisches Netzwerk und Verfahren zum Datenpaketrouting in einem hybriden, optischen Netzwerk

Réseau optique hybride et méthode de routage des paquets de données dans un réseau optique hybride

(84) Designated Contracting States:
**AT BE BG CH CY CZ DE DK EE ES FI FR GB GR HU IE IT LI LU MC NL PT RO SE SI SK TR**

(43) Date of publication of application:
**03.08.2005 Bulletin 2005/31**

(73) Proprietor: **Technische Universität Berlin 10623 Berlin (DE)**

(72) Inventor: **Maier, Martin 10407 Berlin (DE)**

(74) Representative: **Müller, Wolfram Hubertus et al Patentanwälte Maikowski & Ninnemann Postfach 15 09 20 10671 Berlin (DE)**

(56) References cited:
**WO-A-00/69125         WO-A-98/33287**

**Description**

The invention regards a hybrid optical network with a single channel optical ring network and a star network as well as a method of routing data packets in a hybrid optical network. More particularly, the invention regards an evolutionary multichannel upgrade of an optical single channel packed switched metropolitan area ring network and a method for routing traffic in such upgraded network.

Document WO 99/37050 A and Document WO 98/33287 A describe communications systems including an optical network having a star topology in which all network nodes are connected to a central hub. In addition, a subset or all of the network nodes are connected via a peripheral ring network. The central hub consists of multiple WDM (wavelength division multiplex) routers. Traffic for another node is directed over the star network or the peripheral ring network depending on the shortest route.

Resilient Packet Ring IEEE 802.17 standard includes rules for channel utilization, throughput efficiency, service differentiation and resilience of optical single channel packet switched ring metropolitan area networks (MANs). IEEE 802.17 regards a bidirectional dual-fiber ring network with optical to electrical to optical signal conversion at each node. Each node is equipped with two fixed-tuned transmitters and two fixed-tuned receivers, one for each fiber ring.

There have been discussed ring networks that implement wavelength division multiplexing on the ring as an upgrade. However, such upgrade requires high investment costs as each node of the ring needs to be upgraded for WDM.

The problem underlying the present invention is to provide a hybrid optical network that allows an evolutionary, cost sensitive upgrade of known single channel optical ring network and a method of efficiently routing data packets in a hybrid optical network.

This problem is solved by a hybrid optical network with the features of claim 1 and a method of efficiently routing data packets with the features of claim 15. Preferred and advantageous embodiments are identified in the subclaims.

The present invention is based on the idea to improve a single channel optical ring network, in which all ring nodes are connected by the ring, with a star subnetwork, to which only some of the ring nodes additionally belong. This allows for an evolutionary upgrade of the network. Investment costs in the star subnetwork depend on the number of nodes that are added to the star subnetwork. To upgrade a node, only a transmitter and a receiver need to be added to the node. In addition, the use of combiners to which the nodes of the star subnetwork are connected additionally reduces the number of input ports and output ports of the central wavelength router. This way, the number of costs for the central wavelength router is considerably reduced as such costs are proportional to the number of ports.

Also, the combiners serve as concentrators of network nodes and allow to reduce the amount of optical fibers required in the star subnetwork as well as the costs for installing such fibers. Using combiners, it is not necessary to connect each node of the star subnetwork with a port of the central wavelength router. Furthermore, in case optical amplifiers are arranged between each combiner and the central wavelength router, such amplifiers are shared by a plurality of nodes of the star subnetwork, resulting in a reduced number of required amplifiers.

The present invention applies wavelength division multiplexing only on the central wavelength router based star subnetwork, while leaving the ring network unchanged.

In a further advantage, the present invention allows for a large spatial reuse factor as the mean hop distance of the network can be reduced by providing short-cuts over the star subnetwork. In particular, due to the short-cuts across the star subnetwork the hop distances on the ring network are decreased and the spatial reuse factor on the ring network is increased. Moreover, the central wavelength router as a wavelength routing device allows to spatially reuse all wavelenghts at each port simultaneously.

It is pointed out that the terms "tunable transmitter" and "tunable receiver" as understood in the context of this invention denote both a transmitter or receiver that is tunable and an array of fixed-tuned transmitters or fixed-tuned receivers, in which "tuning" means to activate a transmitter or receiver of that array that emitts or senses a desired wavelength. Also, a transmitter/receiver may consist of a combination of an array of fixed-tuned transmitters/receivers and one tunable transmitter/receiver. It is further pointed out that the tunable transmitter or tunable receiver can be combined in a tunable transceiver.

In a preferred embodiment of the invention, the central wavelength router is a single arrayed waveguide grating (AWG). There is only a single central router. The arrayed waveguide grating is a passive router. Due to its passive nature, the router is highly reliable.

In another preferred embodiment, the star subnetwork additionally comprises a plurality of wavelength independent splitters each having one input port and a plurality of output ports, the input ports of the splitters being connected to the output ports of the central wavelength router, the output ports of the splitters each being connected to a tunable receiver of one of the nodes of the subset. The use of splitters allows for multicasting. With multicasting, all network nodes connected to a splitter can receive a data packet which exits an output port of the central router. Accordingly, a data packet needs to be sent less frequently to reach a plurality of nodes such that network recources are saved. Further, by using splitters (and combiners) it is possible to add more nodes to the star subnetwork having a given number of input ports and output ports of the central wavelength router.

Preferably, the nodes of the subset are equally distributed among the ring nodes. This is advantageous to achieve a uniform traffic on the ring network and star subnetwork.

An optical amplifier may be arranged between the output port of a combiner and the corresponding input port of the central wavelength router and/or between an output port of the central wavelength router and the input port of the corresponding splitter. Such optical amplifier compensates for fiber losses, splitting losses and insertion losses in the star subnetwork. The amplifier is, e.g., an Erbium doped fiber amplifier.

In a further embodiment of the present invention, each node of the subset comprises conversion means for optical to electrical to optical conversion of the optical signals. The tunable transmitter and the tunable receiver of a node perform electrical to optical and optical to electrical signal conversion, respectively.

Preferably, each node of the subset comprises transit queues and station queues, the station queues comprising two receive queues and two transmit queues, one receive queue being connected to the ring, one receive queue being connected to the tunable receiver, one transmit queue being connected to the ring and one transmit queue being connected to the tunable transmitter. Data packets stored in a transit queue are transferred to another ring node (store and forward). Data packets stored in a station queue are received by the node or transmitted by the node and, if the node is not the destination node, are sent across or received by the star subnetwork.

The hybrid network preferably further comprises protocol means for routing optical data packets to be sent from a given source ring node to a given destination ring node over the shortest network path, including routing the data packets over the single channel ring network and over the star subnetwork. The shortest network path is determined, e.g., by a network management system which can be a central management system or a decentralized management system. The management system, e.g., modifies look-up routing tables in the network nodes. A media access control (MAC) protocol which belongs to the data link layer (layer two of the OSI reference model) is used to control access to the hybrid network. The MAC protocol aims at maximizing the capacity of the network.

In a preferred embodiment, the hybrid network additionally comprises: means for assigning a wavelength to data packets being sent over the star subnetwork from a given source subset node of the subset to a given destination subset node of the subset, the wavelength determining the route of the data packets through the star subnetwork; means for tuning the tunable transmitter of the source subset node to the assigned wavelength; and means for tuning the tunable receiver of the destination subset node to the assigned wavelength. This allows to send data from a given source subset node of the star subnetwork to a given destination subset node of the star subnetwork.

Said means for assigning a wavelength preferably comprise: means for determining the shortest route for data packets being sent from a given source ring node to a given destination ring node; means for determining within the shortest route a source subset node and a destination subset node routing the data packets over the star subnetwork in a short-cut; and means for determining a wavelength to route the data packets from the source subset node to the destination subset node. The shortest route can be calculated by simply determining the shortest number of hops from one node to another for the data packets to get to their destination. Using a short-cut over the star subnetwork counts as one hop. If data packets are routed over the star subnetwork, i.e., if a path across the subnetwork requires less hops than a path only over the optical ring, a wavelength is assigned to route the data packets across the star subnetwork, i.e., from a source subset node to a destination subset node. The tunable transmitter and the tunable receiver of the resepective subset node are tuned to this wavelength.

The network comprises means for putting the data packets received at the destination subset node on the single channel optical ring network in case the destination subset node is different from the destination node.

In a preferred embodiment, the single channel optical ring network is a bidirectional dual-fiber ring network. On one peripheral fiber ring, data packets are sent in a first direction, on another peripheral fiber ring, data packets are sent in the opposite direction. There are provided electrical transit and station queues for either fiber ring. The use of a bidirectional ring is beneficial as data can be sent in both directions on the single channel optical ring. The spatial reuse factor is improved. However, the present invention may just as well be implemented with a single channel unidirectional optical ring network.

In another preferred embodiment, a passive star coupler is arranged in parallel with the central wavelength router, each node of the subset being coupled both to the central wavelength router and the passive star coupler. The central wavelength router routes data packets assigned to wavelengths of a first waveband and the passive star coupler broadcasts data packets assigned to wavelengths of a second waveband. This embodiment allows for routing additional data over the passive star coupler of the star subnetwork.

In a second aspect of the present invention there is provided a method of routing data packets between a source ring node and a destination ring node of a hybrid optical network that comprises a peripheral optical ring network with a plurality of ring nodes and a star network with a central wavelength router and a subset of the ring nodes, each node of the subset including means to communicate optical data packets over the star subnetwork. Preferably, the hybrid network as defined in claim 1 is used to carry out the method.

The method is based on the idea to add a third kind of data stripping to the well known source stripping (the source node pulls data packets from the ring) and destination stripping (the destination node pulls data packets from the ring) techniques. According to the inventive method, data are pulled from the ring by a node that is neither a source node nor a destination node. The node that pulls the data from the ring belongs to the star subnetwork and is termed source subset node. The pulled data packets are transmitted over the star subnetwork to a destination subset node of the star subnetwork. The data packets are then sent from the destination subset node to the destination ring node again over the optical ring network if the destination ring node is unequal to the destination subset node. The data packets are finally taken from the optical ring network by the destination ring node (destination stripping).

The inventive method will also be referred to as "proxy stripping" in contrast to the known methods of source stripping and destination stripping.

Preferably, the source subset node and the destination subset node are nodes of the shortest route for data packets from the source ring node to the destination ring node over the hybrid network. Shortest path routing including short-cuts over the star subnetwork is performed to increase the capacity of the network. The average number of hops (mean hop distance) is decreased.

However, it is pointed out that "proxy stripping" can be implemented in shortest path routing or alternatively in any arbitrary routing policy. In shortest path routing, the ring nodes need to "know" which subset node is closest to the own location. This knowledge is contained, e.g., in a routing table in each ring node. Alternatively, in a transparent form of proxy stripping, the ring nodes do not have any knowledge about the position of subset nodes on the ring. Proxy stripping is still executed, but the data packets may not take the shortest route from a ring node to a subset node. The advantage is that the ring nodes do not require information about the position of the subset nodes. This is an advantage in particular if an existing ring network is upgraded with a star subnetwork in an evolutionary manner.

In a preferred embodiment, the optical data signals on the optical ring network are converted to electrical data signals when taken from the ring. The electrical data signals are then converted to optical data signals of a specific wavelength that determines the routing of the data signals across the star subnetwork. In one embodiment, the optical data signals are placed in a transmit queue when taken from the optical ring network and transmitted from the transmit queue to a tunable transmitter of the source subset node.

The method preferably additionally comprises the step of regenerating the signal after conversion to an electrical signal. Such regeneration can be a 3R signal regeneration (reamplifying, reshaping, retiming) well known to the skilled person.

In a further preferred embodiment, the source subset node transmits control data with node reservation information to the other nodes of the subset prior to transmitting the data over the star subnetwork. The node reservation information may comprise data about the source address of the source subset node, data about the destination address of the destination subset node and data about the length of the corresponding data packet. The reservation protocol and control data may belong to the media access control (MAC) level of the network.

The invention is explained in more detail below on the basis of an exemplary embodiment with reference to the figures, in which:

Figure 1  shows a hybrid optical network including a single channel optical ring network and a star subnetwork having an arrayed waveguide grating as central wavelength router;

Figure 2  shows the main components of a ring node of the single channel optical ring network of figure 1;

Figure 3  shows the main components of a ring node of the single channel optical ring network of figure 1 that also is a network node of the star subnetwork;

Figure 4  shows in detail the arrangement of a plurality of combiners, a central arrayed waveguide grating and a plurality of splitters in the star subnetwork of figure 1;

Figure 5  shows an alternative embodiment of a hybrid optical network including a single channel optical ring network and a star subnetwork, the star subnetwork comprising both a central arrayed waveguide grating and a central passive star coupler; and

figure 6  shows the main components of a ring node of the hybrid optical network of figure 5 that is also a network node of the star subnetwork.

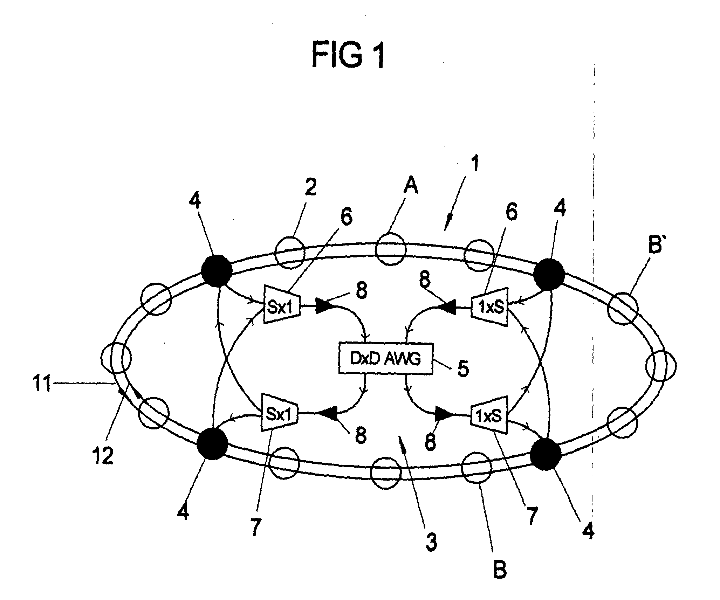

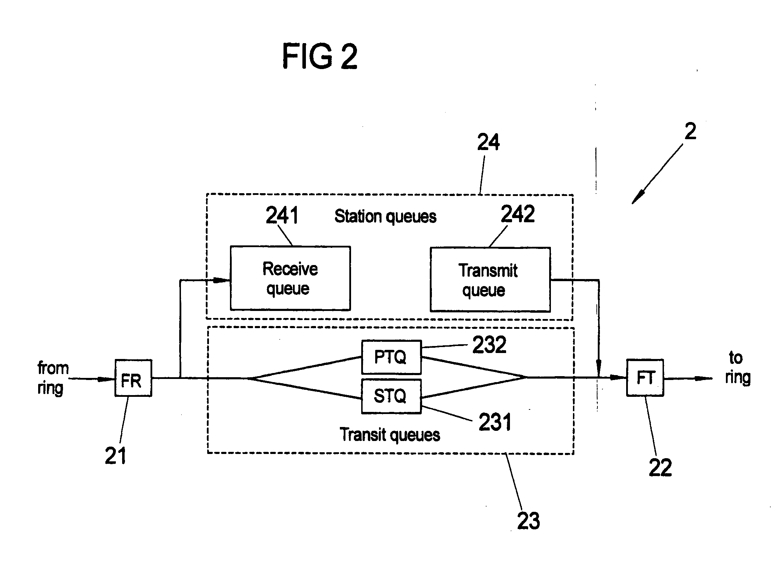

Figure 1 depicts the network architecture of a hybrid optical network. The hybrid optical network includes a bi-directional dual-fiber ring consisting of two peripheral fibers 11, 12 and a plurality of ring nodes 2. Each of the ring nodes 2 is adapted to communicate single channel optical data packets over the single channel ring network 1. To this end, the ring nodes 2 each comprise two fixed-tuned transceivers, one for each single channel fiber 11, 12, as will be described in more detail below with respect to figure 2.

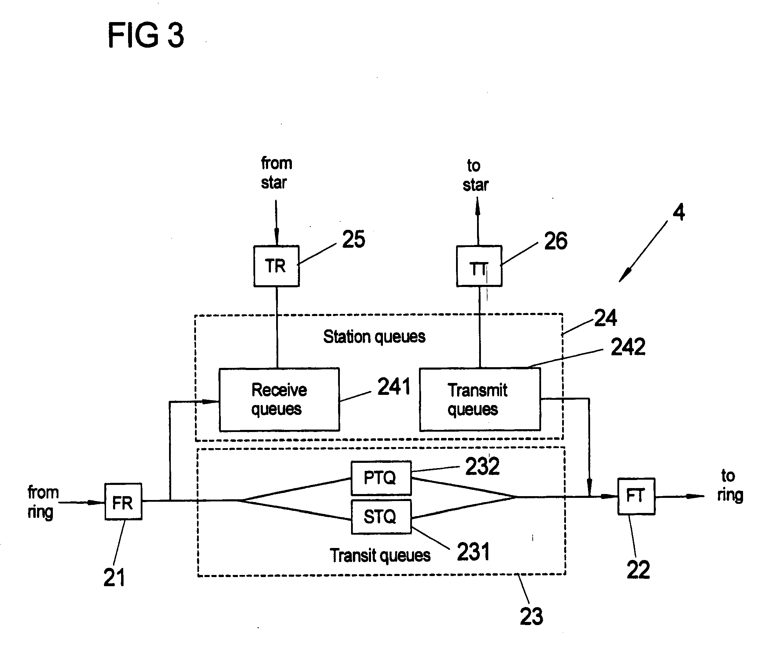

The hybrid network additionally includes a star subnetwork 3. The star subnetwork 3 comprises a plurality of subset nodes 4 which are a subset of the ring nodes 2 of the single channel ring network 1. As will be explained in more detail with respect to figure 3, each subset node 4 of the star subnetwork 3 comprises a tunable transmitter and a tunable receiver to communicate optical data packets over the star subnetwork 3.

The star subnetwork 3 additionally comprises a central wavelength router 5, which preferably is a single arrayed waveguide grating (AWG). The AWG 5 comprises D input ports and D output ports, D ≥ 2. In addition, there are provided a plurality of wavelength insensitive combiners 6 and of wavelength insensitive splitters 7. The combiners 6 include S input ports and one output port, S ≥ 1. The splitters 7 include one input port and S output ports. In the embodiment of figure 1, S = D = 2.

If S = 1, combiners would not be used. In such case, each node of the star subnetwork would be connected to a separate input port of the AWG 5.

The tunable transmitter of a given subset node 4 is connected to a combiner 6 input by using one fiber. Its tunable receiver is connected to the opposite splitter 7 output pair by using one fiber. The output port of the combiners 6 are connected to the input ports of the AWG 5. The input ports of the splitters 7 are connected to the output ports of the AWG. Accordingly, there are D combiners 6 and D splitters 7.

Optionally, between the combiners 6 and the AWG 5 as well as between the AWG 5 and the splitters 7 optical amplifiers 8 such as Erbium doped fiber amplifiers are placed to compensate for fiber losses, splitting losses and insertion losses.

Figure 2 diagrammatically depicts the main components of a ring node 2 of the single channel optical ring network 1. The ring node 2 comprises a fixed-tuned receiver FR 21, which converts the incoming optical data to electrical data. Depending on whether the received data are routed to another ring node 2 or are received at the given ring node 2, the data are sent to transit queues 23 or station queues 24.

The transit queues 23 comprise two queues, one for guaranteed class A traffic (primary transit queue - PTQ) 232 and one secondary transit queue STQ for class B (committed rate) and class C (best effort) traffic. If both queues PTQ 232 and STQ 231 are not full, highest priority is given to MAC traffic of the known MAC protocol. If there is no local control traffic, PTQ traffic is served always first. If PTQ 232 is empty, the local transmission queue (stage queue) is served until STQ 231 reaches a certain queue threshold. If STQ 231 reaches that threshold, STQ in-transit ring traffic is given priority over station traffic such that in-transit packets are not lost due to buffer overflow. This is in accordance with Resilient Packet Ring (RPR) IEEE 802.17 standard.

It is pointed out that this embodiment of the transit queues 23 is only exemplary. In an alternative embodiment, a single queue with a single FIFO queue is used.

The station queues 24 comprise one receive queue 241 and one transmit queue 242. The receive queue 241 comprises data packets that are received at the given ring node 2 for further processing. The transmit queue 242 comprises data packets that are put on the optical ring network at the ring node 2.

As the optical ring network is a single channel, i. e., a single wavelength network, the receiver 21 and the transmitter 22 are fixed-tuned receivers and transmitters, respectively. The transmitter 22 converts the electrical data to optical data and puts the optical data on the ring. In addition, signal regeneration such as 3R signal regeneration including reamplifying, reshaping and retiming may be carried out in the electrical part of the node 2.

Figure 3 diagrammatically depicts a subset node 4 which belongs both to the single channel optical ring network 1 and the star subnetwork 3. The subset node 4 comprises the elements of a ring node 2 as described with respect to figure 2, such that reference is made to figure 2 in that respect. In addition, a tunable receiver 25 and a tunable transmitter 26 are provided. The tunable receiver 25 is connected to the receive queues 241. The tunable transmitter 26 is connected to the transmit queues 242. By means of the tunable transmitter 26, optical data can be transmitted from the given subset node 4 across the star subnetwork 3. The tunable receiver 25 is used to detect optical signals received from the star subnetwork 3 and to convert them into electrical signals.

Preferably, all queues are implemented as FIFO queues.

It is pointed out that each subset node 4 is equipped with two transit queues 23 and two station (receive and transmit) queues 24, one for each fiber ring of the bidirectional ring 1, and two additional station (receive and transmit) queues for the star subnetwork. However, only one set of PTQ and STQ queues 23 is shown in figure 3. The same is true for the ring nodes 2 of figure 2.

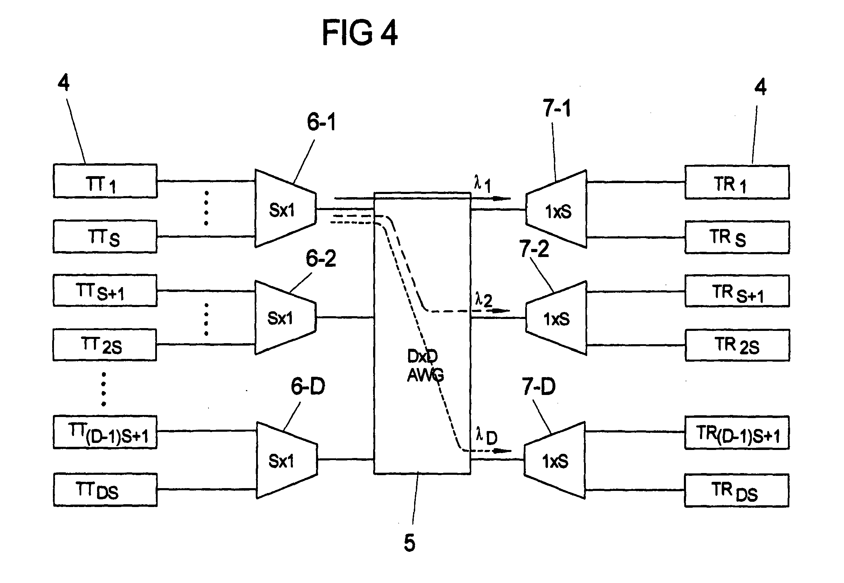

Figure 4 shows the network structure of the star subnetwork 3. The single central AWG 5 is a frequency-cyclic DxD arrayed waveguide grating with D input ports and D output ports, where D ≥ 2.

The subset nodes 4 of the star subnetwork 3 each includes a tunable transmitter TT and a tunable receiver TR, as explained with respect to figure 3. The total number of subset nodes 4, and accordingly of tunable transmitters TT and tunable receivers TR is S x D, with S being the number of input ports of the combiners 6-1, 6-2, ..., 6-D. S is also the number of output ports of the splitters 7-1, 7-2 ..., 7-D.

To the input ports of a first Sx1 combiner 6-1 are connected S tunable transmitters $TT_1$, ..., $TT_S$. To the input ports of a second combiner 6-2 are also connected S tunable transmitters TT, etc. Each combiner 6-1, 6-2, ..., 6-D collects data from S attached tunable transmitters TT and feeds them into one AWG input port.

The output ports of a first 1xS splitter 7-1 are connected to S tunable receivers $TR_1$, ..., $TR_S$. The same is true for further splitters 7-2, ..., 7-D, each connected to an output port of the AWG 5. By using the splitters 7-1, 7-2, ..., 7-D, the AWG output port signals of a given output port are equally distributed to S attached tunable receivers TR by the wavelength-insensitive 1xS splitters. These wavelength-insensitive splitters also enable optical multicasting.

The wavelength $\lambda 1$, $\lambda 2$, ...$\lambda_D$ of the tunable transmitters TT and of the tunable receivers TR determines the route of data packets encoded by signals of that wavelength $\lambda 1$, $\lambda 2$, ...$\lambda_D$ through the AWG 5 and, accordingly through the star subnetwork 3. The AWG 5 routes different wavelengths $\lambda 1$, $\lambda 2$, ...$\lambda_D$ from tunable transmitters $TT_1$ ... $TT_S$ and combined at combiner 6-1 to different output ports of the AWG 5. The same is true for wavelengths applied to the AWG through the other combiners 6-2 ... 6-D. The AWG 5 routes wavelengths such that no collisions occur at the AWG output ports, i. e., each wavelength can be applied to all AWG input ports simultaneously. In other words, with a DxD AWG each wavelength can be spatially reused D times.

Additional wavelengths can be used if several free spectral ranges (FSR) of the AWG 5 are used. The free spectral range is also known as the demultiplexer periodicity. This periodicity is due to the fact that constructive interference at the output ports occurs for a number of wavelengths. One can also describe the free spectral range as the spectral distance to the next diffraction order of the grating of the AWG.

Using R FSRs, $R \geq 1$, allows for R simultaneous transmissions between each AWG input port and output port pair. Thus, the total number of wavelength channels available for routing at each AWG port is D times R, where $R \geq 1$.

Accordingly, each transmitter TT and each receiver TR needs to be tunable over R x D contiguous wavelength channels in order to provide full connectivity in one single hop over the central router 5. Alternatively, a subset of the tunable transmitters TT and the tunable receivers TR are tunable over D contiguous wavelength channels only, with different tunable transmitters TT and tunable receivers TR being tunable over wavelengths of different free spectral ranges of the AWG 5. However, this way a restriction occurs regarding which subset nodes of the star subnetwork can communicate. If R = 1, it is sufficient that the transmitters and receivers are tunable over D contiguous wavelength channels in order to provide full connectivity in one single hop.

To route data packets from a first given subset node and its tunable transmitter TT to a second given subset node and its tunable receiver TR, a wavelength of the number of wavelengths R x D has to be determined and the respective tunable transmitter and tunable receiver have to be tuned to that wavelength. Once this is carried out, the route of the data packets through the AWG 5 and thus through the star subnetwork 3 is determined.

The wavelength channel access of the tunable transmitters and receivers is arbitrated by means of a reservation protocol with pretransmission coordination, as will be further described.

Referring again to figure 1, it is now discussed the transport of data packets between a given source ring node A and a given destination ring node B of the hybrid network. Both nodes A and B are ring nodes 2 only and not part of the star subnetwork 3.

The data packets to be sent from node A to node B are first put on the optical ring network 1 at the source ring node A. It is then determined a route for the data packets being sent from the source node A to the destination node B. Such detemination is made, e. g., by a network management system and/or routing protocols. Preferably, the shortest path through the network from node A to node B is determined to keep a high network capacity for newly generated traffic.

The shortest route is the route that requires the lowest number of hops from one node to an adjacent hop on the way a packet takes from the source node A to the destination node B. In the example discussed in figure 1, it would take a data packet seven hops to travel to node B across the ring network and four hops to travel to the node B by taking the short cut between subset nodes 4 over the star subnetwork 3. Accordingly, the route across the star subnetwork 3 is the shortest route.

It is determined which source subset node 4 and destination subset node 4 of the subset are part of the shortest route. These subset nodes receive information to route data packets from source node A via the star subnetwork 3 to the destination subset node. To this end, e. g., the routing tables of the subset node 4 are updated accordingly by means of control packets.

The data packets sent from node A are then pulled from the optical ring 1 at the source subset node 4 closest to the source node A. The data are transmitted over the star subnetwork 3 to the destination subset node 4 closest to the destination node B. To this end, optical-electrical-optical conversion of the data is carried out at the nodes and a specific wavelength is assigned to the data packets which are sent over the star subnetwork 3. The assigned wavelength determines the route of the data packets through the star subnetwork 3. The tunable transmitter 26 and the tunable receiver 25 of the respective subset nodes 4 are tuned to that wavelength.

Once the data packets routed through the star subnetwork 3 are received at the destination ring node 4, the data packets are sent from the destination subset node 4 over the optical ring network 1 to the destination node B. The destination node B takes the data packets from the optical ring network 1 (destination stripping).

Once a data packet is safely received at the destination node B, an acknowledgement ACK control packet is sent to the source node A. This preferably is done over the ring network 1 only. The acknowledgement control packets as well as reservation control packets are implemented in the media access control (MAC) level of the network.

The invention introduces the novel concept of "proxy stripping", how the routing of data packets as described above is termed.

With proxy stripping, other than with source stripping or destination stripping, a subset node (which may also be termed ring-and-star homed node) which is neither a source node nor a destination node pulls incoming data from the ring network and sends them across the star subnetwork 3 in a single-hop short-cut over the AWG 5.

If the shortest route between a given source and destination node does not include the star subnetwork 3, then destination stripping without proxy stripping is used. For example, if in figure 1 data are sent from a source node A to a destination node B', the shortest route would be that over the peripheral ring network 1. In such case, proxy stripping would not be executed.

Using proxy stripping, and additional referring to figure 3, a subset node 4 takes the corresponding data packets from the ring and places the data packets in its star transmit queue 242. As mentioned above, a subset node 4 only pulls data packets from the ring, if the minimum hop distance between a given source node 2 and a given destination node 2 on the ring 1 is larger than the minimum hop distance between a given source node 2 and a given destination node 2 via short-cuts across the star subnetwork 3.

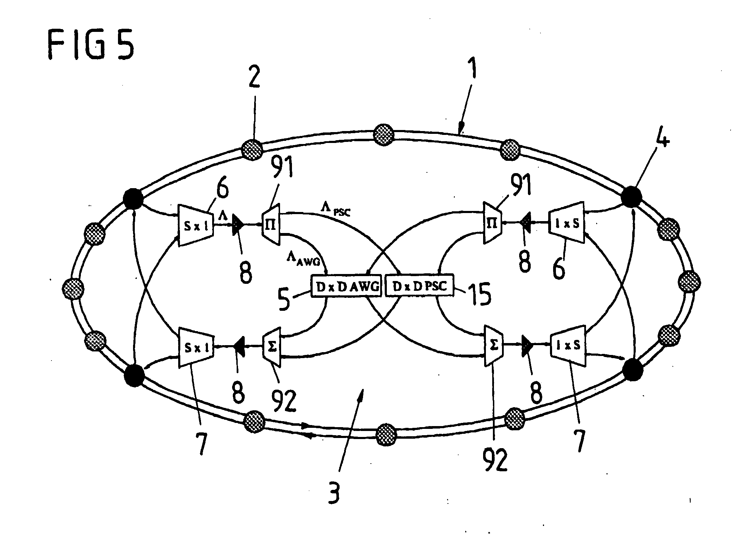

Packets in the star transmit queue 242 are sent by using a reservation protocol with pretransmission coordination. Prior to transmitting a data packet, the corresponding subset node 4 broadcasts a control packet on one of the fiber rings by means of source stripping or across a wavelength insensitive PSC (see Fig. 5). The control packet preferably consists of three fields: first, the source address of the proxy-stripping source subset node, second, the destination address of the destination subset node that is closest to the destination node and, third, the length of the corresponding data packet. Each subset node 4 receives the broadcast control packet and is thus able to acquire and maintain global knowledge of all subset nodes 4 reservation requests. Based on this global knowledge, all subset nodes 4 schedule the transmission and reception of the corresponding data packets over the star subnetwork 3 in a distributed fashion. For example, a deterministic first-come-first-served and first-fit scheduling algorithm is used.

The described hybrid network allows for an evolutionary WDM upgrade of an optical single channel ring network in that it builds into the single-channel node structure while leaving the ring network unchanged. Only a subset of the ring nodes of the single channel ring network needs to be upgraded. Accordingly, nodes can be upgraded and connected to the star subnetwork via dark fibers one at the time in a pay-as-you-grow manner. The described hybrid network requires only one single router, which is sufficient to provide for single-hop interconnection among all subset nodes. The central wavelength router is highly reliable due to its passive nature.

In an alternative embodiment of the star subnetwork, the star subnetwork does not implement splitters 7. Instead, the exit ports of the AWG 5 are connected directly via fibers to tunable receivers of the subset nodes 4. Although multicasting is not possible in this embodiment, a point to point conncetion is still possible.

In a further alternative embodiment, the single channel optical ring network is a unidirectional ring network with one periphal fiber only, such that data can be sent over the ring network in one direction only. By using a bidirectional network, the spatial reuse of bandwidth is increased. It is further possible to use a bidirectional single-fiber ring network.

Figure 5 shows a hybrid optical network that, in comparison with the hybrid optical network of figure 1, additionally includes a passive star coupler (PSC) 15 which is located in parallel with the central AWG 5. In the following, only those features of the hybrid optical network are described which are in addition to the features of the hybrid optical network of figure 1. The components discussed in figure 1 are also present in the hybrid optical network of figure 5.

The passive star coupler 15 has D input ports and D output ports, where $D \geq 2$. The passive star coupler 15 has thus the same number of input ports and output ports as the central AWG 5. The passive star coupler 15 functions like a Dx1 combiner and a 1xD splitter interconnected in series. Accordingly, it collects wavelength channels from all D input ports and equally distributes them among all D output ports. Similar to the splitters 7, a given wavelength channel can be received at all D output ports. Similar to the combiners 6, to avoid channel collisions at the output ports, a given wavelength channel can be used only at one of the D input ports at any time.

The input ports of the passive star coupler 15 are each connected to a waveband partitioner 91. Each waveband partitioner 91 is located between the output port of a combiner 6 and an input port of the AWG 5 and the PSC 15. In case the signals are amplified by an optical amplifier 8, the waveband partitioner 91 is preferably arranged between such optical amplifier 8 and the AWG 5 and PSC 15.

The waveband partitioner 91 has one input port and two output ports. It partitions an incoming set of contiguous wavelength channels $\Lambda$ into two wavebands (subbands $\Lambda_{AWG}$ and $\Lambda_{PSC}$), where $\Lambda = \Lambda_{AWG} + \Lambda_{PSC}$. Each waveband $\Lambda_{AWG}$, $\Lambda_{PSC}$ is routed through a different output port. One output port of the waveband partitioner 91 is connected to an input port of the AWG 5 and one output port of the waveband partitioner 91 is connected to one input port of the PSC 15.

In a symmetrical manner, there are also provided waveband departitioners 92. Each waveband departitioner 92 has two input ports and one output port, the input ports being connected to the AWG 5 and the PSC 15, respectively, and the output port being connected to the input port of a splitter 7 or, if present, an optical amplifier 8 arranged between the waveband departitioner 92 and the splitter 7. The waveband departitioner 92 collects the two different wavebands $\Lambda_{AWG}$ and $\Lambda_{PSC}$ of con-

tiguous wavelength channels from the two input ports. The combined set of A wavelength channels is launched onto the common output port, where $\Lambda = \Lambda_{AWG} + \Lambda_{PSC}$.

The waveband $\Lambda_{AWG}$ comprises D x R contiguous wavelength channels, i. e., $\Lambda_{AWG}$ = D x R. R denotes, as explained above, the number of used FSRs of the underlying AWG 5. The second waveband $\Lambda_{PSC}$ comprises 1 + D x S contiguous wavelength channels, i. e., $\Lambda_{PSC}$ = 1 + D x S. There is provided in waveband $\Lambda_{PSC}$ one control channel with wavelength $\lambda_C$ and D x S data channels, one for each subset node 4 of the star subnetwork. A set of $\Lambda$ wavelength channels are combined by means of S x 1 combiner 6 which collects individual wavelength channels from S subset nodes, where S $\geq$ 1 as explained with respect to figure 1. The wavelength channels are split into two wavebands by waveband partitioner 91. The waveband departitioner 92 collects the two wavebands $\Lambda_{AWG}$ and $\Lambda_{PSC}$ from each pair of output ports of both AWG 5 and PSC 15. The combined set of wavelength channels is equally distributed among the S attached subset nodes by means of the 1 x S splitter 7, where S $\geq$ 1.

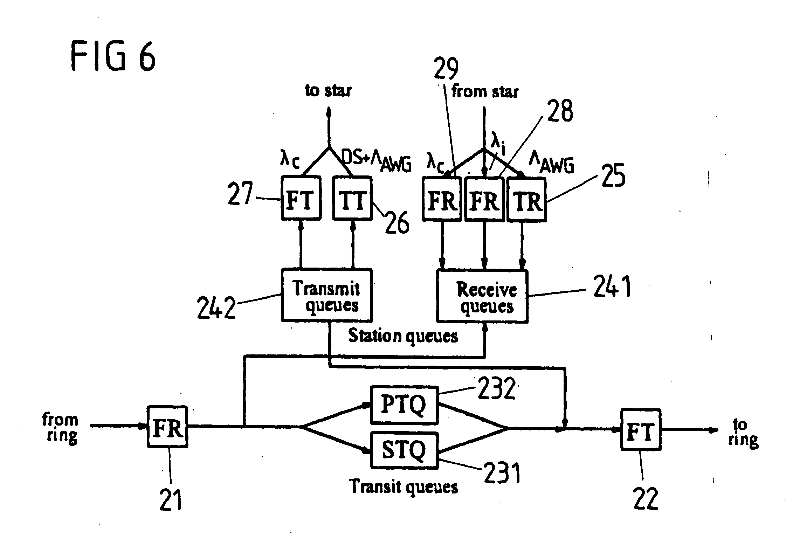

The addition of a passive star coupler 15 to the hybrid optical network requires a modified structure of the subset nodes 4, which are both part of the ring network 1 and the star subnetwork 3. Such modified structure of a subset node 4 is depicted in figure 6.

The subset node 4 of the hybrid network of figure 5 comprises the elements of a subset node as described with respect to figure 3, such that reference is made to figure 3 in that respect. In addition, there are provided a fixed tuned transmitter 27 for additionally transmitting control and data signals into the star subnetwork and two fixed-tuned receivers 28, 29 for additionally receiving signals from the star subnetwork.

The additional fixed-tuned transmitter 27 is tuned to a control wavelength channel $\lambda_c$ of waveband $\Lambda_{PSC}$. As mentioned above, $\Lambda_{PSC}$ = 1 + D x S. The remaining D x S wavelength channels of the waveband $\Lambda_{PSC}$ and all wavelength channels of waveband $\Lambda_{AWG}$ are accessed for data transmission by the tunable transmitter 26 whose tuning range equals:

$$D \times S + \Lambda_{AWG} = D(S+R).$$

For reception of signals from the star subnetwork, additional fixed-tuned receiver 29 is tuned to the control wavelength channel $\lambda_C$ of waveband $\Lambda_{PSC}$. In addition, further additional fixed-tuned receiver 28 is provided for data reception on the passive star coupler 15. The further fixed-tuned receiver 28 is operated at its own dedicated home channel $\lambda_i$ which is one of the wavelength channels of $\Lambda_{PSC}$. Accordingly, each data wavelength channel of waveband $\Lambda_{PSC}$ is dedicated to a different subset node 4 for signal reception. Consequently, data packets transmitted on PSC 15 data wavelength channels do not suffer from receiver collision. In this respect, it is noted that a receiver collision occurs when the receiver of the intended destination node is not tuned to the wavelength channel on which the data packet was sent by the corresponding source node.

In addition, on the wavelength channels of waveband $\Lambda_{AWG}$, data packets are received by the tunable receiver 25 as explained with respect to figures 1 to 4.

It is pointed out that transit queues 231, 232 are depicted in figure 6 only for one single channel fiber of the bi-directional dual fiber ring which consists of two peripheral fibers 11, 12 each carrying one wavelength. Transit queues as well as one transmit and one receive queue are also provided for the other ring. In addition to these transit queues and station queues, each subset node has a separate transmit queue for each transmitter (either fixed-tuned or tunable) and a separate receive queue for each receiver (either fixed-tuned or tunable). Accordingly, besides the four transit queues (two for either ring), each subset node has four transmit queues and five receive queues in total. Preferably, all queues are FIFO queues.

It will now be discussed the benefits of adding a passive star coupler 15 as explained with respect to figures 5 and 6 to the hybrid optical network of figure 1.

First, the wavelength channel $\lambda c$ of fixed wavelength allows to broadcast control information to all other subset nodes 4. It is thus possible to send control data to all other subset nodes 4 over the star subnetwork 3, without occupying bandwidth on the ring network 1 and without bothering ring nodes 2 which are not subset nodes with the routing of such control data. An example for such control data are control data which are used in a reservation protocol with pretransmission coordination, e.g., when informing the subset nodes 4 about reservation requests when sending data packets over the AWG 5.

Also, using the wavelength channel $\lambda c$, large amounts of data can be multicast to a plurality of receivers without using the ring network 1.

Second, the further D x S wavelength channels of waveband $\Lambda_{PSC}$ can be used to send data over the PSC 15 to a specific destination node 4 which is part of the star subnetwork. To this end, a tunable transmitter 26 of a source subset node will tune to a specific wavelength $\lambda_i$ to which the fixed-tuned receiver 28 of one of the destination subset nodes is fixed-tuned. Although the data packets sent out from tunable transmitter 26 will be broadcast by the PSC 15 to all other subset nodes 4, only the one subset node with its fixed-tuned receiver 28 tuned to wavelength $\lambda_i$ will be able to detect these signals. Compared with the transmission of data over AWG 5, it is not required to perform wavelength tuning at the destination node. The receiver of the intended destination is always tuned to its dedicated wavelength channel $\lambda_i$. However, an additional fixed-tuned receiver 28 is required at the subset node 4.

In supplementing the star subnetwork of figure 1 with a passive star coupler 15, additional possibilities and flexibility in routing data packets to a destination node are provided.

It is pointed out that the novel concept of "proxy stripping" as explained with respect to figures 1 to 4 also applies to the hybrid optical network of figure 5. Obviously, short cuts over the star subnetwork can be routed over the AWG 5 or the PSC 15.

**Claims**

1. A hybrid optical network comprising:

   - a single channel optical ring network (1),
   - a plurality of ring nodes (2) of the single channel optical ring network (1), each of the ring nodes (2) being adapted to communicate single channel optical data packets over the single channel ring network (1),
   - a star subnetwork (3) comprising:

      ■ a central wavelength router (5) having a plurality of input ports and a plurality of output ports,
      ■ a plurality of combiners (6) each having a plurality of input ports and one output port, the output ports of the combiners (6) being connected to the input ports of the central wavelength router (5),
      ■ a subset of the ring nodes (4) of the ring network, each node (4) of the subset including a tunable transmitter (26) and a tunable receiver (25) to communicate optical data packets over the star subnetwork (3), the tunable transmitters (26) each being connected to an input port of one of the combiners (6),

   - means for routing optical data packets between two ring nodes (2, A; 2, B), namely a source ring node (2, A) and a destination ring node (2, B), of the optical ring network (1) over the star subnetwork (3), the optical data packets being assigned a specific wavelength that determines the routing of the data packets through the central wavelength router (5), said means for routing optical data packets between two ring nodes (2, A; 2, B) comprising:

      - means for putting data packets to be transmitted on the optical ring network (1) at the source ring node (2, A),
      - means for determining a source subset node (4) and a destination subset node (4) of the subset which are part of a route for data packets being sent from the source ring node (2, A) to the destination ring node (2, B),
      - means for pulling incoming source ring node data packets from the optical ring network (1) at the source subset node (4),
      - means for transmitting the pulled data packets over the star subnetwork (3) to the destination subset node (4),
      - means for sending the data packets from the destination subset node (4) to the destination ring node (2, B) over the optical ring network (1) if the destination ring node (2, B) is unequal to the destination subset node (4), and
      - means for taking the data packets from the optical ring network (1) at the destination ring node (2, B).

2. The network according to claim 1, wherein the central wavelength router (5) is a single arrayed waveguide grating.

3. The network according to claim 1 or 2, additionally comprising a plurality of wavelength independent splitters (7) each having one input port and a plurality of output ports, the input ports of the splitters (7) being connected to the output ports of the central wavelength router (5), the output ports of the splitters (7) each being connected to a tunable receiver (25) of one of the nodes (4) of the subset.

4. The network according to any preceding claim, wherein the nodes (4) of the subset are equally distributed among the ring nodes (2).

5. The network according to any preceding claim, wherein an optical amplifier (8) is arranged between the output port of a combiner (6) and the corresponding input port of the central wavelength router (5).

6. The network according to any of claims 3 to 5, wherein an optical amplifier (8) is arranged between an output port of the central wavelength router (5) and the input port of the corresponding splitter (7).

7. The network according to any preceding claim, wherein each node (4) of the subset comprises conversion means (21, 22) for optical to electrical to optical conversion of the signals, and wherein the tunable transmitter (26) and the tunable receiver (25) of a node (4) perform electrical to optical and optical to electrical signal conversion, respectively.

8. The network according to claim 7, wherein each node (4) of the subset comprises transit queues (23) and station queues (24), the station queues (24) comprising receive queues (241) and transmit queues (242), one receive queue (241) being connected to the tunable receiver (25) and one transmit queue (242) being connected to the tunable transmitter (26).

9. The network according to any preceding claim, further comprising protocol means for routing optical data packets to be sent from a given source ring node (2, A) to a given destination ring node (2, B) over the shortest network path, including routing the data packets over the single channel ring network (1) and over the star subnetwork (3).

10. The network according to any preceding claim, additionally comprising:

- means for assigning a wavelength to data packets being sent over the star subnetwork (3) from a given source subset node (4) of the subset to a given destination subset node (4) of the subset, the wavelength determining the route of the data packets through the star subnetwork (3),
- means for tuning the tunable transmitter (26) of the source subset node (4) to the assigned wavelength, and
- means for tuning the tunable receiver (25) of the destination subset node (4) to the assigned wavelength.

11. The network according to claim 10, wherein the means for assigning a wavelength comprise:

- means for determining the shortest route for data packets being sent from a given source ring node (2, A) to a given destination ring node (2, B),
- means for determining within the shortest route a source subset node (4) and a destination subset node (4) routing the data packets over the star subnetwork (3) in a short-cut,
- means for determining a wavelength to route the data packets from the source subset node (4) to the destination subset node (4).

12. The network according to any preceding claim, wherein the single channel optical ring network (1) is a bidirectional dual-fiber ring network or a bidirectional single-fiber ring network.

13. The network according to any preceding claim, wherein the hybrid optical network is a packet switched metropolitan area network.

14. The network according to any preceding claim, wherein a passive star coupler (15) is arranged in parallel with the central wavelength router (5), each node (4) of the subset being coupled both to the central wavelength router (5) and the passive star coupler (15), and with the central wavelength router (5) routing data packets assigned to wavelengths of a first waveband and the passive star coupler (15) routing data packets assigned to wavelengths of a second waveband.

15. A method of routing data packets between a source ring node (2, A) and a destination ring node (2, B) of a hybrid optical network that comprises a peripheral optical ring network (1) with a plurality of ring nodes (2) and a star network (3) with a central wavelength router (5) and a subset of the ring nodes (2), each node (4) of the subset including means (25, 26) to communicate optical data packets over the star subnetwork (3), the method comprising:

- putting data packets to be transmitted on the optical ring network (1) at the source ring node (2, A),
- determining a source subset node (4) and a destination subset node (4) of the subset which are part of a route for data packets being sent from the source ring node (2, A) to the destination ring node (2, B),
- pulling incoming source ring node data packets from the optical ring network (1) at the source subset node (4),
- transmitting the pulled data packets over the star subnetwork (3) to the destination subset node (4),
- sending the data packets from the destination subset node (4) to the destination ring node (2, B) over the optical ring network (1) if the destination ring node (2, B) is unequal to the destination subset node (4), and
- taking the data packets from the optical ring network (1) at the destination ring node (2, B).

16. The method of claim 15, wherein the source subset node (4) and the destination subset node (4) are nodes of the shortest route for data packets from the source ring node (2, A) to the destination ring node (2, B) over the hybrid network.

17. The method of claim 15 or 16, wherein the optical ring network (1) is a single channel optical ring network, the optical data packets pulled from the single channel optical ring network (1) being converted in the source subset node (4) to an optical wavelength that allows routing of the data packets to the destination subset node (4) over the star subnetwork (3).

18. The method of claim 17, wherein the optical data signals on the optical ring network (1) are converted to electrical data signals when taken from the ring, and wherein the electrical data signals are converted to optical data signals of a specific wavelength that determines the routing of the data signals across the star subnetwork (3).

**19.** The method of claim 18, wherein the optical data signals are placed in a transmit queue (242) when taken from the optical ring network (1) and transmitted from the transmit queue (242) to a tunable transmitter (26) of the source subset node (4).

**20.** The method of claim 18 or 19, additionally comprising the step of regenerating the signal after conversion to an electrical signal.

**21.** The method of any of claims 15 to 20, additionally comprising the step of the source subset node (4) transmitting control data with node reservation information to the other nodes (4) of the subset prior to transmitting the data packets over the star subnetwork (4).

**22.** The method of claim 21, wherein the node reservation information comprises data about the source address of the source subset node (4), data about the destination address of the destination subset node (4) and data about the length of the corresponding data packet.

**Patentansprüche**

**1.** Hybrides optisches Netzwerk, umfassend:

- ein einkanaliges optisches Ringnetzwerk (1),
- mehrere Ringknoten (2) des einkanaligen optischen Ringnetzwerks (1), wobei jeder der Ringknoten (2) dafür ausgelegt ist, einkanalige optische Datenpakete über das einkanalige Ringnetzwerk (1) zu übermitteln,
- ein Stern-Teilnetzwerk (3), umfassend:

• einen zentralen Wellenlängenrouter (5) mit mehreren Eingangsports und mehreren Ausgangsports,
• mehrere Kombinierer (6) jeweils mit mehreren Eingangsports und einem Ausgangsport, wobei die Ausgangsports der Kombinierer (6) mit den Eingangsports des zentralen Wellenlängenrouters (5) verbunden sind,
• eine Teilmenge der Ringknoten (4) des Ringnetzwerks, wobei jeder Knoten (4) der Teilmenge einen abstimmbaren Sender (26) und einen abstimmbaren Empfänger (25) zum Übermitteln von optischen Datenpaketen über das Stern-Teilnetzwerk (3) enthält, wobei die abstimmbaren Sender (26) jeweils mit einem Eingangsport eines der Kombinierer (6) verbunden sind,

- Mittel zum Routen optischer Datenpakete zwischen zwei Ringknoten (2, A; 2, B), nämlich einem Quellenringknoten (2, A) und einem Zielringknoten (2, B) des optischen Ringnetzwerks (1) über das Stern-Teilnetzwerk (3), wobei den optischen Datenpaketen eine spezifische Wellenlänge zugewiesen wird, die das Routen der Datenpakete durch den zentralen Wellenlängenrouter (5) bestimmt, wobei die Mittel zum Routen von optischen Datenpakten zwischen zwei Ringknoten (2, A; 2, B) folgendes umfassen:
- Mittel zum Legen von zu übertragenden Datenpaketen auf das optische Ringnetzwerk (1) an den Quellenringknoten (2, A),
- Mittel zum Bestimmen eines Quellenteilmengenknotens (4) und eines Zielteilmengenknotens (4) der Teilmenge, die Teil einer Route für von dem Quellenringknoten (2, A) zu dem Zielringknoten (2, B) gesendete Datenpakete sind,
- Mittel zum Herausziehen ankommender Quellenringknotendatenpakete aus dem optischen Ringnetzwerk (1) an den Quellenteilmengenknoten (4),
- Mittel zum Übertragen der herausgezogenen Datenpakete über das Stern-Teilnetzwerk (3) zu dem Zielteilmengenknoten (4),
- Mittel zum Senden der Datenpakete aus dem Zielteilmengenknoten (4) zu dem Zielringknoten (2, B) über das optische Ringnetzwerk (1), wenn der Zielringknoten (2, B) nicht gleich dem Zielteilmengenknoten (4) ist und
- Mittel zum Herausnehmen der Datenpakete aus dem optischen Ringnetzwerk (1) an dem Zielringknoten (2, B).

**2.** Netzwerk nach Anspruch 1, wobei der zentrale Wellenlängenrouter (5) ein einziges Array-Wellenleitergitter ist.

**3.** Netzwerk nach Anspruch 1 oder 2, zusätzlich mit mehreren wellenlängenunabhängigen Verteilern (7) jeweils mit einem Eingangsport und mehreren Ausgangsports, wobei die Eingangsports der Verteiler (7) mit den Ausgangsports des zentralen Wellenlängenrouters (5) verbunden sind und die Ausgangsports der Verteiler (7) jeweils mit einem abstimmbaren Empfänger (25) eines der Knoten (4) der Teilmenge verbunden sind.

**4.** Netzwerk nach einem der vorhergehenden Ansprüche, wobei die Knoten (4) der Teilmenge gleichmäßig unter den Ringknoten (2) verteilt sind.

**5.** Netzwerk nach einem der vorhergehenden Ansprüche, wobei zwischen dem Ausgangsport eines Kombinierers (6) und dem entsprechenden Eingangsport des zentralen Wellenlängenrouters (5) ein optischer Verstärker (8) angeordnet ist.

6. Netzwerk nach einem der Ansprüche 3 bis 5, wobei zwischen einem Ausgangsport des zentralen Wellenlängenrouters (5) und dem Eingangsport des entsprechenden Verteilers (7) ein optischer Verstärker (8) angeordnet ist.

7. Netzwerk nach einem der vorhergehenden Ansprüche, wobei jeder Knoten (4) der Teilmenge Umsetzungsmittel (21, 22) zur Umsetzung der Signale von optisch zu elektrisch zu optisch umfasst und wobei der abstimmbare Sender (26) und der abstimmbare Empfänger (25) eines Knotens (4) Signalumsetzung von elektrisch zu optisch bzw. optisch zu elektrisch durchführen.

8. Netzwerk nach Anspruch 7, wobei jeder Knoten (4) der Teilmenge Transitwarteschlangen (23) und Stationswarteschlangen (24) umfaßt, wobei die Stationswarteschlangen (24) Empfangswarteschlangen (241) und Sendewarteschlangen (242) umfassen, wobei eine Empfangswarteschlange (241) mit dem abstimmbaren Empfänger (25) und eine Sendewarteschlange (242) mit dem abstimmbaren Sender (26) verbunden ist.

9. Netzwerk nach einem der vorherigen Ansprüche, ferner mit Protokollmitteln zum Routen von von einem gegebenen Quellenringknoten (2, A) zu einem gegebenen Zielringknoten (2, B) zu sendenden optischen Datenpaketen über den kürzesten Netzwerkpfad, einschließlich des Routens der Datenpakete über das einkanalige Ringnetzwerk (1) und über das Stern-Teilnetzwerk (3).

10. Netzwerk nach einem der vorherigen Ansprüche, zusätzlich umfassend:

- Mittel zum Zuweisen einer Wellenlänge zu Datenpaketen, die über das Stern-Teilnetzwerk (3) von einem gegebenen Quellenteilmengenknoten (4) der Teilmenge zu einem gegebenen Zielteilmengenknoten (4) der Teilmenge gesendet werden, wobei die Wellenlänge die Route der Datenpakete durch das Stern-Teilnetzwerk (3) bestimmt,
- Mittel zum Abstimmen des abstimmbaren Senders (26) des Quellenteilmengenknotens (4) auf die zugewiesene Wellenlänge und
- Mittel zum Abstimmen des abstimmbaren Empfängers (25) des Zielteilmengenknotens (4) auf die zugewiesene Wellenlänge.

11. Netzwerk nach Anspruch 10, wobei die Mittel zum Zuweisen einer Wellenlänge folgendes umfassen:

- Mittel zum Bestimmen der kürzesten Route für von einem gegebenen Quellenringknoten (2, A) zu einem Zielringknoten (2, B) zu sendende Datenpakete,
- Mittel zum Bestimmen eines Quellenteilmengenknotens (4) und eines Zielteilmengenknotens (4) innerhalb der kürzesten Route, wodurch die Datenpakete in einer Abkürzung über das Stern-Teilnetzwerk (3) geroutet werden,
- Mittel zum Bestimmen einer Wellenlänge zum Routen der Datenpakete von dem Quellenteilmengenknoten (4) zu dem Zielteilmengenknoten (4).

12. Netzwerk nach einem der vorherigen Ansprüche, wobei das einkanalige optische Ringnetzwerk (1) ein bidirektionales Doppelfaser-Ringnetzwerk oder ein bidirektionales Einfaser-Ringnetzwerk ist.

13. Netzwerk nach einem der vorherigen Ansprüche, wobei das hybride optische Netzwerk ein paketvermitteltes städtisches Netzwerk ist.

14. Netzwerk nach einem der vorherigen Ansprüche, wobei parallel mit dem zentralen Wellenlängenrouter (5) ein passiver Sternkoppler (15) angeordnet ist, wobei jeder Knoten (4) der Teilmenge sowohl an den zentralen Wellenlängenrouter (5) als auch an den passiven Sternkoppler (15) angekoppelt wird, und wobei der zentrale Wellenlängenrouter (5) Datenpakete routet, die Wellenlängen eines ersten Wellenbands zugewiesen sind, und der passive Sternkoppler (15) Datenpakete routet, die Wellenlängen eines zweiten Wellenbands zugewiesen sind.

15. Verfahren zum Routen von Datenpaketen zwischen einem Quellenringknoten (2, A) und einem Zielringknoten (2, B) eines hybriden optischen Netzwerks, das ein peripheres optisches Ringnetzwerk (1) mit mehreren Ringknoten (2) und ein Stern-Netzwerk (3) mit einem zentralen Wellenlängenrouter (5) und einer Teilmenge der Ringknoten (2) umfaßt, wobei jeder Knoten (4) der Teilmenge Mittel (25, 26) zum Übermitteln von optischen Datenpaketen über das Stern-Teilnetzwerk (3) enthält, mit den folgenden Schritten:

- Legen von zu übertragenden Datenpaketen auf das optische Ringnetzwerk (1) an den Quellenringknoten (2, A),
- Bestimmen eines Quellenteilmengenknotens (4) und eines Zielteilmengenknotens (4) der Teilmenge, die Teil einer Route für von dem Quellenringknoten (2, A) zu dem Zielringknoten (2, B) gesendete Datenpakete sind,
- Herausziehen ankommender Quellenringknotendatenpakete aus dem optischen Ringnetzwerk (1) an den Quellenteilmengenknoten (4),
- Übertragen der herausgezogenen Datenpakete über das Stern-Teilnetzwerk (3) zu dem Zielteilmengenknoten (4),
- Senden der Datenpakete von dem Zielteilmengenknoten (4) zu dem Zielringknoten (2, B) über das optische Ringnetzwerk (1), wenn der Zielringknoten (2, B) nicht gleich dem Zielteilmengenknoten (4) ist, und
- Herausnehmen der Datenpakete aus dem optischen Ringnetzwerk (1) an dem Zielringknoten (2, B).

16. Verfahren nach Anspruch 15, wobei der Quellenteilmengenknoten (4) und der Zielteilmengenknoten (4) Knoten der kürzesten Route für Datenpakete von dem Quellenringknoten (2, A) zu dem Zielringknoten (2, B) über das hybride Netzwerk sind.

17. Verfahren nach Anspruch 15 oder 16, wobei das optische Ringnetzwerk (1) ein einkanaliges optisches Ringnetzwerk ist, wobei die aus dem einkanaligen optischen Ringnetzwerk (1) herausgezogenen optischen Datenpakete in dem Quellenteilmengenknoten (4) in eine optische Wellenlänge umgesetzt werden, die ein Routen der Datenpakete zu dem Zielteilmengenknoten (4) über das Stern-Teilnetzwerk (3) erlaubt.

18. Verfahren nach Anspruch 17, wobei die optischen Datensignale auf dem optischen Ringnetzwerk (1) beim Herausnehmen aus dem Ring in elektrische Datensignale umgesetzt werden und wobei die elektrischen Datensignale in optische Datensignale einer spezifischen Wellenlänge umgesetzt werden, die das Routen der Datensignale über das Stern-Teilnetzwerk (3) bestimmt.

19. Verfahren nach Anspruch 18, wobei die optischen Datensignale beim Herausnehmen aus dem optischen Ringnetzwerk (1) in einer Sendewarteschlange (242) abgelegt werden und von der Sendewarteschlange (242) zu einem abstimmbaren Sender (26) des Quellenteilmengenknotens (4) übertragen werden.

20. Verfahren nach Anspruch 18 oder 19, zusätzlich mit dem Schritt des Regenerierens des Signals nach der Umsetzung in ein elektrisches Signal.

21. Verfahren nach einem der Ansprüche 15 bis 20, zusätzlich mit dem Schritt, daß der Quellenteilmengenknoten (4) vor dem Übertragen der Datenpakete über das Stern-Teilnetzwerk (4) Steuerdaten mit Knotenreservierungsinformationen zu den anderen Knoten (4) überträgt.

22. Verfahren nach Anspruch 21, wobei die Knotenreservierungsinformationen Daten über die Quellenadresse des Quellenteilmengenknotens (4), Daten über die Zieladresse des Zielteilmengenknotens (4) und Daten über die Länge des entsprechenden Datenpakets umfassen.

## Revendications

1. Réseau optique hybride comprenant:

   - un réseau optique en anneau monovoie (1),
   - une pluralité de noeuds d'anneau (2) du réseau optique en anneau monovoie (1), chacun de ces noeuds d'anneau (2) étant adapté de façon à communiquer des paquets de données optiques monovoie sur le réseau en anneau monovoie (1),
   - un sous-réseau en étoile (3) comprenant:

      ■ un routeur à longueur d'onde centrale (5) ayant une pluralité de bornes d'entrée et une pluralité de bornes de sortie,
      ■ une pluralité de combineurs (6) ayant chacun une pluralité de bornes d'entrée et une borne de sortie, les bornes de sortie des combineurs (6) étant connectées aux bornes d'entrée du routeur à longueur d'onde centrale (5),
      ■ un sous-ensemble des noeuds d'anneau (4) du réseau en anneau, chaque noeud (4) du sous-ensemble comprenant un émetteur accordable (26) et un récepteur accordable (25) pour communiquer les paquets de données optiques sur le sous-réseau en étoile (3), les émetteurs accordables (26) étant chacun connectés à une borne d'entrée d'un des combineurs (6),

   - un moyen pour acheminer les paquets de données optiques entre deux noeuds d'anneau (2, A ; 2, B), à savoir un noeud d'anneau source (2, A) et un noeud d'anneau de destination (2, B), du réseau optique en anneau (1) sur le sous-réseau en étoile (3), une longueur d'onde spécifique étant attribuée aux paquets de données optiques, longueur d'onde qui détermine l'acheminement des paquets de données à travers le routeur à longueur d'onde centrale (5), ledit moyen pour acheminer les paquets de données optiques entre deux noeuds d'anneau (2, A ; 2, B) comprenant:

      - un moyen pour mettre les paquets de données à émettre sur le réseau optique en anneau (1) au niveau du noeud d'anneau source (2, A),
      - un moyen pour déterminer un noeud de sous-ensemble source (4) et un noeud de sous-ensemble de destination (4) du sous-ensemble qui font partie d'une voie d'acheminement pour les paquets de données qui sont envoyés du noeud d'anneau source (2, A) au noeud d'anneau de destination (2, B),

- un moyen pour extraire les paquets de données entrants du noeud d'anneau source du réseau optique en anneau (1) au niveau du noeud de sous-ensemble source (4),

- un moyen pour émettre les paquets de données extraits sur le sous-réseau en étoile (3) vers le noeud de sous-ensemble de destination (4),

- un moyen pour envoyer les paquets de données du noeud de sous-ensemble de destination (4) au noeud d'anneau de destination (2, B) sur le réseau optique en anneau (1) si le noeud d'anneau de destination (2, B) est inégal au noeud de sous-ensemble de destination (4), et

- un moyen pour prendre les paquets de données du réseau optique en anneau (1) au niveau du noeud d'anneau de destination (2, B).

2. Réseau selon la revendication 1, le routeur à longueur d'onde centrale (5) étant une seule grille ordonnée de guide d'ondes.

3. Réseau selon la revendication 1 ou 2, comprenant en outre une pluralité de séparateurs (7) indépendants de longueur d'onde ayant chacun une borne d'entrée et une pluralité de bornes de sortie, les bornes d'entrée des séparateurs (7) étant connectées aux bornes de sortie du routeur à longueur d'onde centrale (5), les bornes de sortie des séparateurs (7) étant chacune connectées à un récepteur accordable (25) d'un des noeuds (4) du sous-ensemble.

4. Réseau selon l'une quelconque des revendications précédentes, les noeuds (4) du sous-ensemble étant répartis également parmi les noeuds d'anneau (2).

5. Réseau selon l'une quelconque des revendications précédentes, un amplificateur optique (8) étant disposé entre la borne de sortie d'un combineur (6) et la borne d'entrée correspondante du routeur à longueur d'onde centrale (5).

6. Réseau selon l'une quelconque des revendications 3 à 5, un amplificateur optique (8) étant disposé entre une borne de sortie du routeur à longueur d'onde centrale (5) et la borne d'entrée du séparateur correspondant (7).

7. Réseau selon l'une quelconque des revendications précédentes, chaque noeud (4) du sous-ensemble comprenant un moyen de conversion (21, 22) pour la conversion des signaux de optique á électrique à optique, et l'émetteur accordable (26) et le récepteur accordable (25) d'un noeud (4) effectuant la conversion électrique à optique et optique à électrique, respectivement, des signaux.

8. Réseau selon la revendication 7, chaque noeud (4) du sous-ensemble comprenant des files d'attente de transit (23) et des files d'attente de station (24), les files d'attente de station (24) comprenant des files d'attente de réception (241) et des files d'attente d'émission (242), une file d'attente de réception (241) étant connectée au récepteur accordable (25) et une file d'attente d'émission (242) étant connectée à l'émetteur accordable (26).

9. Réseau selon l'une quelconque des revendications précédentes, comprenant en outre un moyen protocole pour acheminer les paquets de données optiques à envoyer d'un noeud d'anneau source donné (2, A) à un noeud d'anneau de destination donné (2, B) sur le chemin du réseau le plus court, y compris l'acheminement des paquets de données sur le réseau en anneau monovoie (1) et sur le sous-réseau en étoile (3).

10. Réseau selon l'une quelconque des revendications précédentes, comprenant:

    - un moyen pour attribuer une longueur d'onde à des paquets de données qui sont envoyés sur le sous-réseau en étoile (3) d'un noeud de sous-ensemble source donné (4) du sous-ensemble à un noeud de sous-ensemble de destination donné (4) du sous-ensemble, cette longueur d'onde déterminant la voie d'acheminement des paquets de données à travers le sous-réseau en étoile (3),

    - un moyen pour accorder l'émetteur accordable (26) du noeud de sous-ensemble source (4) sur la longueur d'onde attribuée, et

    - un moyen pour accorder le récepteur accordable (25) du noeud de sous-ensemble de destination (4) sur la longueur d'onde attribuée.

11. Réseau selon la revendication 10, le moyen pour attribuer une longueur d'onde comprenant:

    - un moyen pour déterminer la voie d'acheminement la plus courte pour les paquets de données qui sont envoyés d'un noeud d'anneau source donné (2, A) à un noeud d'anneau de destination donné (2, B),

    - un moyen pour déterminer sur le chemin d'acheminement le plus court un noeud de sous-ensemble source (4) et un noeud de sous-ensemble de destination (4) acheminant les paquets de données sur le sous-réseau en étoile (3) dans un raccourci,
- un moyen pour déterminer une longueur d'onde pour acheminer les paquets de données du noeud de sous-ensemble source (4) au noeud de sous-ensemble de destination (4).

12. Réseau selon l'une quelconque des revendications précédentes, le réseau optique en anneau monovoie (1) étant un réseau en anneau bidirectionnel à double fibre ou un réseau en anneau bidirectionnel à fibre unique.

13. Réseau selon l'une quelconque des revendications précédentes, le réseau optique hybride étant un réseau métropolitain à commutation par paquets.

14. Réseau selon l'une quelconque des revendications précédentes, un coupleur en étoile passif (15) étant disposé en parallèle avec le routeur à longueur d'onde centrale (5), chaque noeud (4) du sous-ensemble étant couplé à la fois au routeur à longueur d'onde centrale (5) et au coupleur en étoile passif (15), et avec le routeur à longueur d'onde centrale (5) acheminant les paquets de données attribués à des longueurs d'onde d'une première gamme d'ondes et le coupleur en étoile passif (15) acheminant des paquets de données attribués à des longueurs d'onde d'une deuxième gamme d'ondes.

15. Procédé d'acheminement de paquets de données entre un noeud d'anneau source (2, A) et un noeud d'anneau de destination (2, B) d'un réseau optique hybride qui comprend un réseau optique en anneau périphérique (1) avec une pluralité de noeuds d'anneau (2) et un réseau en étoile (3) avec un routeur à longueur d'onde centrale (5) et un sous-ensemble de noeuds d'anneau (2), chaque noeud (4) du sous-ensemble comprenant des moyens (25, 26) pour communiquer des paquets de données optiques sur le sous-réseau en étoile (3), ce procédé comprenant:

- la mise de paquets de données à émettre sur le réseau optique en anneau (1) au niveau du noeud d'anneau source (2, A),
- la détermination d'un noeud de sous-ensemble source (4) et d'un noeud de sous-ensemble de destination (4) du sous-ensemble qui font partie d'une voie d'acheminement pour les paquets de données qui sont envoyés du noeud d'anneau source (2, A) au noeud d'anneau de destination (2, B),
- l'extraction de paquets de données entrants du noeud d'anneau source du réseau optique en anneau (1) au niveau du noeud de sous-ensemble source (4),
- l'émission des paquets de données extraits sur le sous-réseau en étoile (3) vers le noeud de sous-ensemble de destination (4),

- l'envoi des paquets de données du noeud de sous-ensemble de destination (4) au noeud d'anneau de destination (2, B) sur le réseau optique en anneau (1) si le noeud d'anneau de destination (2, B) est inégal au noeud de sous-ensemble de destination (4), et
- la prise des paquets de données du réseau optique en anneau (1) au niveau du noeud d'anneau de destination (2, B).

16. Procédé selon la revendication 15, le noeud de sous-ensemble source (4) et le noeud de sous-ensemble de destination (4) étant des noeuds de la voie d'acheminement la plus courte pour les paquets de données depuis le noeud d'anneau source (2, A) jusqu'au noeud d'anneau de destination (2, B) sur le réseau hybride.

17. Procédé selon la revendication 15 ou 16, le réseau optique en anneau (1) étant un réseau optique en anneau monovoie, les paquets de données optiques extraits du réseau optique en anneau monovoie (1) étant convertis dans le noeud de sous-ensemble source (4) en une longueur d'onde optique qui permet l'acheminement des paquets de données jusqu'au noeud de sous-ensemble de destination (4) sur le sous-réseau en étoile (3).

18. Procédé selon la revendication 17, les signaux de données optiques sur le réseau optique en anneau (1) étant convertis en signaux de données électriques lorsqu'ils sont pris de l'anneau, et les signaux de données électriques étant convertis en signaux de données optiques d'une longueur d'onde spécifique qui détermine l'acheminement des signaux de données à travers le sous-réseau en étoile (3).

19. Procédé selon la revendication 18, les signaux de données optiques étant placés dans une file d'attente d'émission (242) lorsqu'ils sont pris du réseau optique en anneau (1) et étant émis de la file d'attente d'émission (242) vers un émetteur accordable (26) du noeud de sous-ensemble source (4).

20. Procédé selon la revendication 18 ou 19, comprenant en outre l'étape consistant à régénérer le signal après la conversion en un signal électrique.

21. Procédé selon l'une quelconque des revendications 15 à 20, comprenant en outre l'étape consistant en ce que le noeud de sous-ensemble source (4) émette des données de commande avec une information de réservation de noeud aux autres noeuds (4) du sous-ensemble avant d'émettre les paquets de données sur le sous-réseau en étoile (4).

22. Procédé selon la revendication 21, cette information de réservation de noeud comprenant des données

**EP 1 560 457 B1**

sur l'adresse de la source du noeud de sous-ensemble source (4), des données sur l'adresse de destination du noeud de sous-ensemble de destination (4) et des données sur la longueur du paquet de données correspondant.

FIG 1

# FIG 2

Station queues

241  Receive queue

242  Transmit queue

24

2

from ring

FR

21

PTQ  232

STQ  231

Transit queues

23

FT

22

to ring

EP 1 560 457 B1

# FIG 3

EP 1 560 457 B1

# FIG 4

EP 1 560 457 B1

FIG 5

FIG 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9937050 A

- WO 9833287 A